# EUROPEAN PATENT SPECIFICATION

(11) **EP 2 817 146 B1**
(45) Date of publication and mention of the grant of the patent: **12.09.2018**
(21) Application number: 12869389.2
(22) Date of filing: 26.09.2012
(51) Int. Cl.: B29C 45/14, B32B 15/08, B32B 15/04, B32B 7/02, B32B 15/20, B32B 27/20, B32B 27/32, B32B 27/34, C25D 11/04, C25D 11/18, C25D 11/24, B29K 69/00, B29K 71/00, B29K 81/00, B29K 309/08, B29K 705/02, B29L 9/00

(54) **METHOD OF PREPAIRING ALUMINUM ALLOY RESIN COMPOSITE**
VERFAHREN ZUR HERSTELLUNG EINES ALUMINIUMLEGIERUNGSHARZVERBUNDSTOFFS
PROCÉDÉ DE PRÉPARATION D'UN COMPOSITE ALLIAGE D'ALUMINIUM/RÉSINE

(30) Priority: 24.02.2012 CN 201210043639
(43) Date of publication of application: 31.12.2014
(73) Proprietor: Shenzhen BYD Auto R&D Company Limited, Shenzhen, Guangdong 518118 (CN); BYD Company Limited, Shenzhen 518118 (CN)
(72) Inventor: SUN, Jian, Shenzhen Guangdong 518118 (CN); WU, Yanqin, Shenzhen Guangdong 518118 (CN); ZHANG, Yunxia, Shenzhen Guangdong 518118 (CN)
(74) Representative: Gulde & Partner
(86) International application number: PCT/CN2012/082036
(87) International publication number: WO 2013/123772

(56) References cited:
- EP-A1- 1 958 763
- WO-A1-2004/048087
- WO-A1-2011/123790
- CN-A- 102 268 183
- JP-A- 2005 342 895
- US-A1- 2002 040 888
- DATABASE CA [Online] CHEMICAL ABSTRACTS SERVICE, COLUMBUS, OHIO, US; 26 January 2006 (2006-01-26), Taisei Plas Co., Ltd., Japan: "Composition materials of anodized aluminum alloys and thermoplastic resins, and their manufacture by injection molding", XP2743882, Database accession no. 144:89290 -& JP 2006 001216 A (TAISEI PLAS CO LTD) 5 January 2006 (2006-01-05)
- JIE GONG ET AL: "Electrochemical/chemical synthesis of nanostructured arrays of oxide cones or rings", JOURNAL OF MATERIALS CHEMISTRY, vol. 18, no. 15, 12 March 2008 (2008-03-12), page 1741, XP55211319, ISSN: 0959-9428, DOI: 10.1039/b719097b
- WONBAE LEE ET AL: "Nanostructure-Dependent Water-Droplet Adhesiveness Change in Superhydrophobic Anodic Aluminum Oxide Surfaces: From Highly Adhesive to Self-Cleanable", LANGMUIR, vol. 26, no. 3, 2 February 2010 (2010-02-02), pages 1412-1415, XP55211376, ISSN: 0743-7463, DOI: 10.1021/la904095x -& "Supporting Information: Nanostructure-Dependent Water-Droplet Adhesiveness Change in Superhydrophobic Anodic Aluminum Oxide Surfaces: From Highly Adhesive to Self-Cleanable", , 29 December 2009 (2009-12-29), XP55211428, Retrieved from the Internet: URL:http://pubs.acs.org/doi/suppl/10.1021/ la904095x/suppl_file/la904095x_si_001.pdf [retrieved on 2015-09-04]
- FURNEAUX R C ET AL: "The formation of controlled-porosity membranes from anodically oxidized aluminium", NATURE, NATURE PUBLISHING GROUP, UNITED KINGDOM, vol. 337, no. 6203, 12 January 1989 (1989-01-12), pages 147-149, XP002121054, ISSN: 0028-0836, DOI: 10.1038/337147A0

## Description

### FIELD

The present disclosure relates to the field of metal-plastic molding, and more particularly to a method of preparing an aluminum alloy-resin.

### BACKGROUND

In the fields of manufacture of articles such as automobiles, household appliances and industrial machines, a metal and a resin need to be firmly bonded together. Currently, in a conventional method, an adhesive is used at normal temperature or under heating to integrally bond a metal and a synthetic resin. One research direction is to integrally bond an engineering resin with high strength to a magnesium alloy, an aluminum alloy, or ferroalloys such as stainless steel directly without an adhesive.

Nano molding technology (NMT) is a technique of integrally bonding a metal and a resin, which allows the resin to be directly injection molded on a surface of a metal sheet by nano molding the surface of the metal sheet so as to obtain a metal-resin integrally molded product. For effective bonding of a metal and a resin, NMT may replace commonly used insert molding or zinc-aluminum or magnesium-aluminum die casting so as to provide a metal-resin integrally molded product with low cost and high performance. Compared with the bonding technology, NMT may reduce the whole weight of the product, and may ensure excellent strength of the mechanical structure, high processing rate, high output, and many appearance decoration methods, and consequently may apply to vehicles, IT apparatuses and 3C products.

In JP 2005 342895 A a method of preparing an aluminum alloy resin composite is described wherein an aluminum alloy substrate having an oxide layer with micropores is immersed in a aqueous solution of a water soluble amine system compound.After drying it is inserted to a forming mold wherein a PBT system resin composite or an PPS system resin composite is ejected.

### SUMMARY

Embodiments of the present disclosure seek to solve at least one of the problems existing in the prior art to at least some extent, particularly technical problems of weak combination force between the aluminum alloy and resin in an aluminum alloy-resin composite. And the present disclosure aims to provide a method of preparing an aluminum alloy-resin composite with strong combination force between an aluminum alloy and a resin, which is easy for massive production and of less pollution.

According to the present disclosure, there is provided a method of preparing an aluminum alloy-resin composite, comprising the steps of:
S1: anodizing a surface of an aluminum alloy substrate to form an oxide layer on the surface, in which the oxide layer is formed with nanopores;
S2: immersing the resulting aluminum alloy substrate in step S1 in an alkaline solution having a pH of about 10 to about 13, to form corrosion pores in an outer surface of the oxide layer, wherein the alkaline solution consists of an aqueous solution consisting of at least one selected from a soluble carbonates, a soluble phosphate, a soluble sulfate, a soluble borate and NaOH;
S3: injection molding a resin onto the surface of the resulting aluminum alloy substrate in step S2 in a mold to obtain the aluminum alloy-resin composite.

It was found by the inventors surprisingly that a unique two-layer spatial pore structure is formed on the surface of aluminum alloy, by means of the method according to embodiments of present disclosure, an aluminum oxide layer is formed on the surface of aluminum alloy, and the aluminum oxide layer possess nanopores with excellent properties. By means of the technical solutions according to embodiments of present disclosure, nanopores having a pore size of about 10 to about 100nm are formed, which has a unique structure, and has well connectivity with resin. Meanwhile, by means of further corrosion, corrosion pores are on the outer surface, to be contacted with a resin, of the aluminum oxide layer. The corrosion pores have a larger pore size than nanopores. By means of the technical solutions according to embodiments of present disclosure, nanopores having a pore size of about 200nm to about 2000nm are formed on the outer surface, which is a unique structure and contribute to enhance the connectivity of a resin with aluminum alloy. In the course of following molding step, a resin may penetrate into the pores in the inner layer through the relative bigger pores on the outer surface of aluminum alloy, which will make molding easier. According to embodiments of present disclosure, aluminum alloy may be joined to a resin tightly without additional moiety, and a higher strength may be obtained. According to embodiments of present disclosure, there is little influence on the size of metal substrate and the appearance of aluminum alloy, and relatively less heat is produced in the course of processing. Meanwhile, resin may be easily injection molded into the corrosion pores with larger pore size on the surface, and there is no particular requirement on the resin. Then the present technical solution may be used widely, is environment-friendly, and may be adopted for massive production.

### BRIEF DESCRIPTION OF THE DRAWINGS

These and other aspects and advantages of the disclosure will become apparent and more readily appreciated from the following descriptions taken in conjunction with the drawings in which:
Fig. 1 shows the presence of two-layer spatial pore structure in the aluminum oxide layer prepared in one embodiment of present disclosure;
Fig. 2 shows a scanning electron microscopy diagram of aluminum alloy sheet surface after surface treatment 1 in Example 1; and
Figs. 3a and 3b show scanning electron microscopy diagrams of aluminum alloy sheet surface after surface treatment 2 in Example 1.

### DETAILED DESCRIPTION

Reference will be made in detail to embodiments of the present disclosure. The embodiments described herein are explanatory, illustrative, and used to generally understand the present disclosure. The embodiments shall not be construed to limit the present disclosure.

According to a first aspect of the present disclosure, a method of preparing an aluminum alloy-resin composite is provided. The method comprises steps of:

### S1: anodizing a surface of an aluminum alloy substrate to form an oxide layer on the surface, in which the oxide layer is formed with nanopores

According to embodiments of present disclosure, in this step, aluminum alloy substrate, optionally pre-treated prior to step S1, may be subjected to anodization treatment, thus an oxide layer may be formed on the surface of the aluminum alloy substrate, and the oxide layer may be formed with nanopores. According to embodiments of present disclosure, the method for the anodization treatment is well known to the skilled person in the art. According to embodiments of present disclosure, the step S1, namely the anodization treatment may comprise: providing an aluminum alloy substrate, optionally pre-treated prior to this step, as an anode in a H₂SO₄ solution with a concentration of about 10wt% to about 30wt%; and electrolyzing the aluminum alloy substrate at a temperature of about 10°C to about 30°C at a voltage of about 10V to about 100V for about 1min to about 40min to form the oxide layer with a thickness of about 1µm to about 10µm on the surface of the aluminum alloy substrate. According to embodiments of present disclosure, any apparatus well known for the anodization treatment may be applied in present disclosure, for example according to an embodiment of present disclosure, an anodization tank may be applied. According to embodiments of present disclosure, the oxide layer formed by means of anodization treatment may have a preferred thickness of about 1µm to about 10µm, preferably about 1µm to about 5µm. According to embodiments of present disclosure, the nanopores of the oxide layer may have a pore size of about 10nm to about 100nm, preferred about 20nm to about 80 nm, and further preferred about 20nm to about 60 nm. According to embodiments of present disclosure, the nanopores may have a depth of about 0.5µm to about 9.5µm, preferably about 0.5µm to about 5µm. It was founded by the inventors surprisingly that with the nanopores, the connectivity force between the oxide layer and the resin will be stronger.

### S2: immersing the resulting aluminum alloy substrate in step S1 in an alkaline solution having a pH of about 10 to about 13, to form corrosion pores in an outer surface of the oxide layer

According to embodiments of present disclosure, in this step, the resulting aluminum alloy substrate in step S1 may be immersed in an alkaline solution with a pH of about 10 to about 13, thus corrosion pores may be formed in the outer surface of the oxide layer formed on the aluminum alloy substrate in step S1. In this step, an alkaline solution with a pH of about 10 to about 13 is used to treat the resulting aluminum alloy substrate in step S1, then corrosion pores may be formed in an outer surface of the oxide layer, and the size of corrosion pores is usually larger than that of nanopores. The type of the alkaline solution is not limited, and according to embodiments of present disclosure, according to embodiments of present disclosure, the alkaline solution includes an aqueous solution consisting of at least one selected from a soluble carbonates, NaOH, a soluble phosphate, a soluble sulfate and a soluble borate. According to embodiments of present disclosure, the alkaline solution is an aqueous solution consisting of at least one selected from a group consisting of Na₂CO₃, NaHCO₃, NaH₂PO₄, Na₂HPO₄, Na₃PO₄, Na₂SO₃ and Na₂B₄O₇. According to embodiments of present disclosure, the alkaline solution includes an aqueous solution comprising Na₂CO₃ and/or NaHCO₃. According to embodiments of present disclosure, in the alkaline solution, Na₂CO₃ and/or NaHCO₃ have a mass percent concentration of about 0.1wt%-15wt% respectively. According to embodiments of present disclosure, in the alkaline solution, Na₂CO₃ and/or NaHCO₃ have a mass percent concentration of about 0.1wt%-10wt% respectively. According to embodiments of present disclosure, corrosion pores with a pore size of micrometer level is preferably formed. According to embodiments of present disclosure, the corrosion pores may have a pore size of up to about 200nm to about 2000nm, even up to about 200nm to about 1000nm, further even up to about 400nm to about 1000nm. According to embodiments of present disclosure, the corrosion pores may have a depth of up to about 0.5µm to about 9.5µm, even about 0.5µm to 5µm, and the corrosion pores are preferably communicated with the nanopores. Then, with the forming of corrosion pores, in the following step S3, namely a step of molding, the resin will enter into the pores in the surface of aluminum alloy substrate in the course of injection molding, thus the resin layer formed will be well joined with the aluminum alloy substrate. Then, the corrosion pores formed will distribute evenly in the surface of oxide layer with uniform pore sizes, and pore structure may be excellent, enabling a better connectivity performance of a resin layer with the aluminum alloy substrate, resulting in a better tensile strength and a better integral joining of the aluminum alloy-resin composite. According to an embodiment of present disclosure, step S2 comprises repeatedly immersing the resulting aluminum alloy in step S1 in the alkaline solution having a pH of about 10 to about 13 for a plurality of times, i.e. more than one times, for example for about 2-10 times, each immersing lasts for about 1 min to about 60min, and cleaning the aluminum alloy with water after each immersing, for example washing with de-ionized water. According to an embodiment of present disclosure, the cleaning may comprise just placing the article to be cleaned in a washing tank and stand for about 1 min to 5min, and may comprise washing the article to be cleaned in a washing tank for about 1 min to 5min.

### S3: injection molding a resin onto the surface of the resulting aluminum alloy substrate in step S2 in a mold to obtain the aluminum alloy-resin composite

According to embodiments of present disclosure, in this step, the resulting aluminum alloy substrate after the treatments in steps S1 and S2 may be placed in a mold, and a resin composition may be injected into the mold to combine with the aluminum alloy substrate, thus an aluminum alloy-resin composite is formed after molding treatment.

As mentioned before, prior to the treatment of step S1, the aluminum alloy substrate may be subjected to a pretreatment on the surface, which generally comprises mechanical burnishing or mechanical lapping to remove visible foreign matters from the surface, and degreasing and washing the aluminum alloy substrate to remove processing oil adhered to the metal surface. Preferably, pretreatment may comprise burnishing the surface of an aluminum alloy substrate, for example may further comprise burnishing the surface of an aluminum alloy substrate using a sand paper of about 100 mesh to about 400 mesh or using a polishing machine, to create small pores of microns. According to embodiments of present disclosure, the burnished aluminum alloy substrate may be sequentially subjected to oil removing, a first washing with water, alkali etching, a second washing with water, neutralizing, and a third washing with water. According to embodiments of present disclosure, the aluminum alloy substrate may be cleaned by means of ultrasonic wave using any well-known solvent for about 0.5 hour to about 2 hours to remove oily dirty from the surface of aluminum alloy substrate, and then place the aluminum alloy substrate in an acid/alkali aqueous solution, and wash the surface again under ultrasonic wave. The types of the solvents and acid/alkali aqueous solution are not limited, the solvent used may be ethanol or acetone, and the acid/alkali aqueous solution may be at least one selected from a group consisting of hydrochloric acid, sulphuric acid, sodium hydroxide, potassium hydroxide and the like. According to embodiments of present disclosure, the aluminum alloy substrate is subjected to oil removing treatment using water-free ethanol to remove oil from the surface, and then washed using water. Then, the washed aluminum alloy substrate is immersed in a sodium hydroxide solution at a concentration of about 30-70g/L and at a temperature of about 40°C to about 80°C to alkali etch the aluminum alloy substrate for about 1-5min, and washed using deionized water. Then, the aluminum alloy substrate is neutralized using a 10∼30 wt% HNO₃ to remove trace alkali solution, and washed using deionized water. Thus, a pore with a size of microns may be formed in the surface of aluminum alloy substrate. According to embodiments of present disclosure, the pore size may be about 1-10µm.

There are no special limitations to the aluminum alloy used in present disclosure, the examples may be Industry-Standard 1000-7000 series, or various aluminum alloys of molded-class. The aluminum alloy in this disclosure may be commonly-used aluminum alloy with various shapes and structures, which is not limited in present disclosure. The various shapes and structures of the aluminum alloy may be achieved by mechanical processing.

There is no special limitation to the resin used in present disclosure, which may include any resin capable of joining with aluminum alloy, in which thermoplastic resin is preferred. According to embodiments of present disclosure, the thermoplastic resin may include a mixture of a main resin and a polyolefin resin. According to embodiments of present disclosure, the main resin may include non-crystalline resin, which has a surface gloss and a toughness both superior to those of the highly crystalline resins in the prior art, is used as an injection molding material, and a polyolefin resin with a melting point of about 65 °C to about 105°C is also used. Therefore, injection molding at a specific mound temperature may be not required during the molding, subsequent annealing treatment may also be not required, the molding process may be simplified, and it may be ensured that the obtained metal-resin composite may have high mechanical strength and good surface treatment characteristics, thus solving the problem of the surface decoration of a plastic article and meeting the diverse requirements of customers.

According to embodiments of present disclosure, it has been found by the inventors through many experiments that in the present disclosure, by using a polyolefin resin with a melting point of about 65 °C to about 105°C in the non-crystalline main resin, the flowing capability of the resin in the nanoscale micropores in the surface of the metal sheet may be enhanced, thus ensuring strong adhesive force between the metal and the plastic as well as high mechanical strength of the metal-resin composite. Preferably, based on 100 weight parts of the thermoplastic resin, the amount of the main resin is about 70 weight parts to about 95 weight parts, and the amount of the polyolefin resin is about 5 weight parts to about 30 weight parts.

It has also been found by the inventors that the flowing capability of the resin may be enhanced by including a flow improver in the thermoplastic resin, thus further enhancing the adhesive force between the metal and the plastic as well as the injection molding performance of the resin. Preferably, based on 100 weight parts of the thermoplastic resin, the thermoplastic resin further contains about 1 weight part to about 5 weight parts of a flow improver. Preferably, the flow improver is a cyclic polycarbonate.

As mentioned before, the resin used in present disclosure may be non-crystalline resin. According to embodiments of present disclosure, the main resin may include a mixture of polyphenylene ether (PPO) and polyphenylene sulfide (PPS). According to one embodiment of present disclosure, in the main resin, the weight ratio of polyphenylene ether to polyphenylene sulfide is about 3:1 to about 1:3, preferably about 2:1 to about 1:1. According to embodiments of present disclosure, the main resin includes a mixture of polyphenylene oxide and a polyamide. According to one embodiment of present disclosure, in the main resin, the weight ratio of polyphenylene oxide to the polyamide is about 3:1 to about 1:3, preferably about 2:1 to about 1:1. According to embodiments of present disclosure, in the main resin, the main resin is a polycarbonate, which may be linear chain polycarbonate or branched polycarbonate.

According to embodiments of present disclosure, the polyolefin resin has a melting point of about 65 °C to about 105°C, preferably the polyolefin resin may be grafted polyethylene. Preferably, a grafted polyethylene with a melting point of about 100°C to about 105°C may be used as polyolefin resin.

The resin used in present disclosure may further comprise other modifier additives, and there is no special limitation to the additives, for example, the resin may comprise a filler. And there is no special limitation to the filler, the non-limiting example of the filler is fiber filler or powder inorganic filler. The fiber filler may be at least one selected from a group consisting of fiberglass, carbon fiber and aromatic polyamide fiber. And the powder inorganic filler may be at least one selected from a group consisting of calcium carbonate, magnesium carbonate, silica, heavy barium sulfate, talcum powder, glass and clay. According to embodiments of present disclosure, based on 100 weight parts of the main resin, the content of the fiber filler is 50-150 weight parts and the content of the powder filler is 50-150 weight parts. Then the resin has a linear expansion coefficient similar to the aluminum alloy both in horizontal and vertical direction.

According to embodiments of present disclosure, the resin used in present disclosure may be prepared by mixing main resin and polyolefin resin. For example, the resin is prepared by mixing evenly a main resin and a polyolefin resin, and then granulation with twin-screw extruding machine.

According to embodiments of present disclosure, a flow improver and a filler may be added to the main resin and mixed evenly, thus the obtained resin has a linear expansion coefficient similar to the aluminum alloy both in horizontal and vertical direction.

According to embodiments of present disclosure, the conditions to carry out the injection molding are not limited. For example, according to one embodiment of present disclosure, the condition of injection molding may be: mold temperature 50 to 200°C, nozzle temperature 200-350°C, generally the amount of injected resin composite is 0.1-1000g, the surface of the prepared composite has a resin layer with a depth of 0.1-10mm.

The preparation method of the present disclosure is simple which simplifies significantly the production process when compared with existing adhesive technology, shortens the production time, and significantly reduces the process complexity. All above may be achieved only by directly injection molding after using the process method of the present disclosure. At the same time, the prepared aluminum alloy resin composite by the preparation method of the present disclosure has a combination between the resin layer and the aluminum alloy substrate, and has better tensile shear strength.

According to embodiments of present disclosure, the aluminum alloy-resin composite comprises an aluminum alloy substrate and a resin layer, in which a resin forming the resin layer is filled in nanopores and corrosion pores. The resin is any well-known resin, as long as it was known that can be combined with aluminum alloy in the art.

In order to make the technical problem, the technical solution and the advantageous effects of the present disclosure more clear, the present disclosure will be further described below in detail with reference to examples thereof. It would be appreciated that particular examples described herein are merely used to understand the present disclosure. The examples shall not be construed to limit the present disclosure. The raw materials used in the examples and the comparative examples are all commercially available, without special limits.

### Example 1

In this example, an aluminum alloy resin composite was prepared.

### 1. Pretreatment:

A commercially available A5052 aluminum alloy plate with a thickness of 1mm was cut into 15mm × 80mm rectangular sheets, which were then polished in a polishing machine, and cleaned with water-free ethanol, and then immersed in a 40g/L NaOH aqueous solution. After 2 min, the rectangular sheets were washed with water and dried to obtain pretreated aluminum alloy sheets.

### 2. Surface treatment 1:

Each aluminum alloy sheet as an anode was placed in an anodizing bath containing a 20wt% H₂SO₄ solution, the aluminum alloy was electrolyzed at a voltage of 20V at 20°C for 10 min, and then the aluminum alloy sheet was blow-dried.

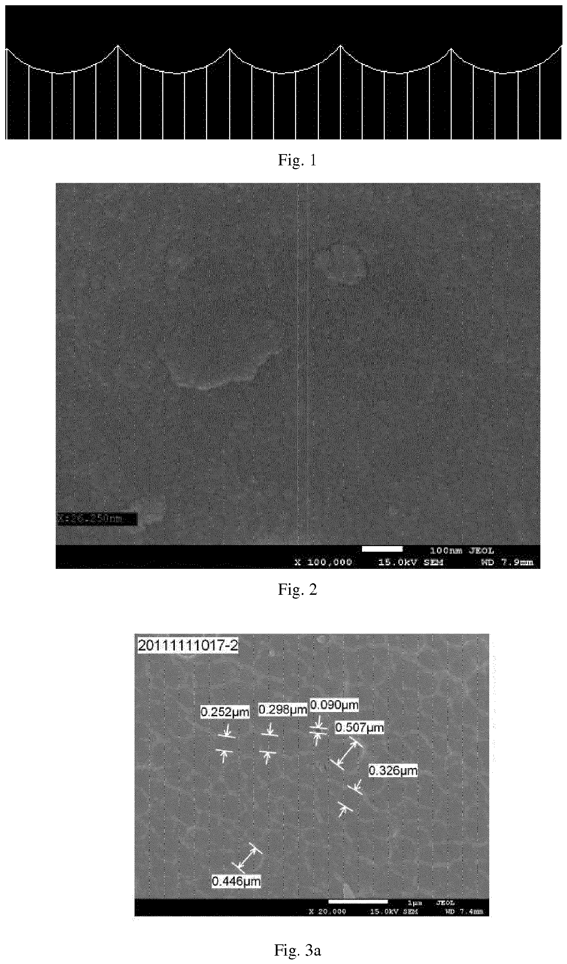

The cross section of the aluminum alloy sheet after the surface treatment 1 was observed by a metalloscope, to find out that an aluminum oxide layer with a thickness of 5µm was formed on the surface of the electrolyzed aluminum alloy sheet. The surface of the aluminum alloy sheet after the surface treatment 1 was observed by an electron microscope (see Fig. 2), to find out that nanopores with a pore size of about 40nm to about 60nm and a depth of 1µm was formed in the aluminum oxide layer.

### 3. Surface treatment 2

100ml aqueous solution containing 10wt% Na₂CO₃(pH=12.2) was prepared in a beaker. The aluminum alloy sheet after step (2) was immersed in the sodium carbonate solution at 20 °C, taken out after 5 min, and placed in a beaker containing water to be immersed for 1min. After 5 cycles, after water immersing for the last time, the aluminum alloy sheet was blow-dried.

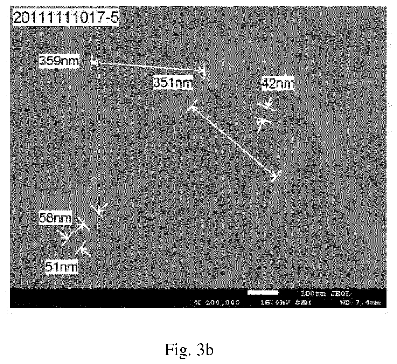

The surface of the aluminum alloy sheet after the surface treatment 2 was observed by an electron microscope (see Figs. 3a and 3b), to find out that corrosion pores with a pore size of 1000nm to 1500nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores.

### 4. Molding:

The dried aluminum alloy piece was inserted into an injection mold. A resin composition containing a polyphenylene sulfide (PPS) resin and 30wt% fiberglass is injection molded. The aluminum alloy resin composite which is a firmly combination of aluminum alloy and resin composite is obtained after being demolded and cooled.

### Example 2

In this example, an aluminum alloy resin composite was prepared by a method which is substantially the same as the method in Example 1, with the following exceptions.

The alkaline solution used in the surface treatment 2 is a 100ml aqueous solution containing 15wt% Na₂CO₃ with pH=12.5. It was observed that a layer of aluminum oxide film having a thickness of about 5µm was formed after electrolysis, and nanopores having a size of 40-60nm was formed in the aluminum oxide layer. And it was observed that after surface treatment 2, corrosion pores with a size of 1500-2000nm and a depth of 0.5µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores. And an aluminum alloy resin composite was prepared.

### Example 3

In this example, an aluminum alloy resin composite was prepared by a method which is substantially the same as the method in Example 1, with the following exceptions.

The alkaline solution used in the surface treatment 2 is a 100ml aqueous solution containing 12wt% Na₂CO₃ with pH=12.3. It was observed that a layer of aluminum oxide film having a thickness of about 5µm was formed after electrolysis, and nanopores having a size of 40-60nm and a depth of 1µm were formed in the aluminum oxide layer. And it was observed that after surface treatment 2, corrosion pores with a size of 1200-1800nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores. And an aluminum alloy resin composite was prepared.

### Example 4

In this example, an aluminum alloy resin composite was prepared by a method which is substantially the same as the method in Example 1, with the following exceptions.

The alkaline solution used in the surface treatment 2 is a 100ml aqueous solution containing 8wt% Na₂CO₃ with pH=11.9. It was observed that a layer of aluminum oxide film having a thickness of about 5µm was formed after electrolysis, and nanopores having a size of 40-60nm and a depth of 1µm were formed in the aluminum oxide layer. And it was observed that after surface treatment 2, corrosion pores with a size of 600-1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores. And an aluminum alloy resin composite was prepared.

### Example 5

In this example, an aluminum alloy resin composite was prepared by a method which is substantially the same as the method in Example 1, with the following exceptions.

The alkaline solution used in the surface treatment 2 is a 100ml aqueous solution containing 6wt% Na₂CO₃ with pH=11.7. It was observed that a layer of aluminum oxide film having a thickness of about 5µm was formed after electrolysis, and nanopores having a size of 40-60nm and a depth of 2µm were formed in the aluminum oxide layer. And it was observed that after surface treatment 2, corrosion pores with a size of 600-1000nm and a depth of 3µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores. And an aluminum alloy resin composite was prepared.

### Example 6

In this example, an aluminum alloy resin composite was prepared by a method which is substantially the same as the method in Example 1, with the following exceptions.

The alkaline solution used in the surface treatment 2 is a 100ml aqueous solution containing 15wt% NaHCO₃ with pH=11.5. It was observed that a layer of aluminum oxide film having a thickness of about 5µm was formed after electrolysis, and nanopores having a size of 40-60nm and a depth of 2µm were formed in the aluminum oxide layer. And it was observed that after surface treatment 2, corrosion pores with a size of 300-1000nm and a depth of 3µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores. And an aluminum alloy resin composite was prepared.

### Example 7

In this example, an aluminum alloy resin composite was prepared by a method which is substantially the same as the method in Example 1, with the following exceptions.

The alkaline solution used in the surface treatment 2 is a 100ml aqueous solution containing 1wt% NaOH with pH=12. It was observed that a layer of aluminum oxide film having a thickness of about 5µm was formed after electrolysis, and nanopores having a size of 40-60nm and a depth of 1µm were formed in the aluminum oxide layer. And it was observed that after surface treatment 2, corrosion pores with a size of 800-1500nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores were communicated with the nanopores. And an aluminum alloy resin composite was prepared.

### Comparative example 1

### 1. Pretreatment:

A commercially available A5052 aluminum alloy plate with a thickness of 1mm was cut into 15mm × 80mm rectangular sheets, which were then polished in a polishing machine, and cleaned with water-free ethanol, and then immersed in a 2wt% NaOH aqueous solution. After 2 min, the rectangular sheets were washed with water and dried to obtain pretreated aluminum alloy sheets.

### 2. Surface-treatment:

Each aluminum alloy sheet was immersed into a hydrazine hydrate aqueous solution having a concentration of 5wt% with pH=11.2. After 2min at 50°C, the aluminum alloy sheetwas taken out and washed with deionized water. After 30 cycles, the aluminum alloy sheet was taken out and dried in a drying oven at 60 °C.

### 3. Molding:

The dried aluminum alloy piece was inserted into an injection mold. A resin composition containing a polyphenylene sulfide (PPS) resin and 30wt% fiberglass was injection molded. The aluminum alloy resin composite which was a firmly combination of aluminum alloy and resin composite was obtained after being demolded and cooled.

### Comparative example 2

### 1. Pretreatment:

A commercially available A5052 aluminum alloy plate with a thickness of 1mm was cut into 15mm × 80mm rectangular sheets, which were then polished in a polishing machine, and cleaned with water-free ethanol, and then immersed in a 2wt% NaOH aqueous solution. After 2 min, the rectangular sheets were washed with water and dried to obtain pretreated aluminum alloy sheets.

### 2. Surface-treatment:

Each aluminum alloy sheet as an anode was placed in an anodizing bath containing a 20wt% H₂SO₄ solution, the aluminum alloy was electrolyzed at a voltage of 15V for 5min, and then the aluminum alloy sheet was blow-dried.

### 3. Molding:

The dried aluminum alloy piece was inserted into an injection mold. A resin composition containing a polyphenylene sulfide (PPS) resin and 30wt% fiberglass is injection molded. The aluminum alloy resin composite which was a firmly combination of aluminum alloy and resin compositewas obtained after being demolded and cooled.

### Performance test

The connectivity of the aluminum alloy and the resin: the aluminum alloy resin composites prepared in examples 1-7and comparative examples 1-2 were fixed in a universal material testing machine to perform tensile test. The test results under maximum load can be regarded as the connectivity force value between the aluminum alloy and resin, the test results were summarized in Table 1.

**Table 1**

| | Thickness of oxide film layer /µm | Pore size of nanopore /nm | Depth of nanopore /µm | Pore size of corrosion pore /nm | Depth of Nano Pore/µm | Combination /N |
|---|---|---|---|---|---|---|
| Example 1 | 5 | 40-60 | 1 | 1000-1500 | 4 | 1255 |
| Example 2 | 5 | 40-60 | 0.5 | 1500-2000 | 4.5 | 1221 |
| Example 3 | 5 | 40-60 | 1 | 1200-1800 | 4 | 1209 |
| Example 4 | 5 | 40-60 | 1 | 600-1000 | 4 | 1245 |
| Example 5 | 5 | 40-60 | 2 | 600-1000 | 3 | 1223 |
| Example 6 | 5 | 40-60 | 2 | 300-1000 | 3 | 1251 |
| Example 7 | 5 | 40-60 | 1 | 800-1500 | 4 | 1267 |
| Comparative example 1 | | 20-100 | | | | 357 |
| Comparative example 2 | | 40-60 | | | | 65 |

It can be seen from Table 1 that the combination between the resin and the aluminum alloy in the aluminum alloy resin composite of the present disclosure can achieve up to 1211 N, and then the combination is excellent. While the combination between the resin and the aluminum alloy in existing aluminum alloy resin composite is just tens or hundreds of newton. The performance of the aluminum alloy resin composite in the present disclosure has been improved significantly compared the existing ones and the resin molding is easier. The aluminum alloy in the present disclosure does not need additional moiety to combine firmly to the resin with stronger strength, which has little effect on size of the metal substrate and appearance of the aluminum alloy. At the same time, it is easier to inject mold resin directly into the corrosion holes with a bigger surface. It also has no specific requirement with synthetic resin, so the application scope is wider. And there is no environmental pollution which is more suitable for mass production.

## Claims

1. A method of preparing an aluminum alloy-resin composite, comprising the steps of:
S1: anodizing a surface of an aluminum alloy substrate to form an oxide layer on the surface, in which the oxide layer is formed with nanopores having a pore size of 10 to 100nm;
S2: immersing the resulting aluminum alloy substrate in step S1 in an alkaline solution having a pH of about 10 to about 13, to form corrosion pores having a pore size of 200nm to 2000nm in an outer surface of the oxide layer, wherein the alkaline solution consists of an aqueous solution consisting of at least one selected from a soluble carbonates, a soluble phosphate, a soluble sulfate, a soluble borate and NaOH
S3: injection molding a resin onto the surface of the resulting aluminum alloy substrate in step S2 in a mold to obtain the aluminum alloy-resin composite.

2. The method according to claim 1, wherein the alkaline solution includes an aqueous solution comprising at least one selected from a group consisting of Na₂CO₃, NaHCO₃, NaH₂PO₄, Na₂HPO₄, Na₃PO₄, Na₂SO₃ and Na₂B₄O₇.

3. The method according to claim 2, wherein in the alkaline solution, Na₂CO₃ and/or NaHCO₃ have a mass percent concentration of about 0.1wt%-15wt% respectively, preferably of about 0.1wt%-10wt% respectively.

4. The method according to one of the preceding claims, wherein step S2 comprises repeatedly immersing the resulting aluminum alloy in step S1 in the alkaline solution having a pH of about 10 to about 13 for more than one times, each immersing lasts for about 1 min to about 60min, and cleaning the aluminum alloy with water after each immersing.

5. The method according to one of the preceding claims, wherein step S2 comprises repeatedly immersing the resulting aluminum alloy in step S1 in an alkaline solution having a pH of about 10 to about 13 for about 2-10 times.

6. The method according to one of the preceding claims, wherein anodizing the surface of the aluminum alloy substrate comprises:
providing the aluminum alloy substrate as an anode in a H₂SO₄ solution with a concentration of about 10wt% to about 30wt%; and
electrolyzing the aluminum alloy substrate at a temperature of about 10°C to about 30°C at a voltage of about 10V to about 100V for about 1min to about 40min to form the oxide layer with a thickness of about 1µm to about 10µm on the surface of the aluminum alloy substrate.

7. The method according to one of the preceding claims, wherein the resin is a thermoplastic resin.

8. The method according to claim 7, wherein the thermoplastic resin includes a main resin and a polyolefin resin.

9. The method according to claim 8, wherein the main resin includes polyphenylene ether and polyphenylene sulfide, and the polyolefin resin has a melting point of about 65 °C to about 105°C.

10. The method according to claim 8, wherein the main resin includes polyphenylene oxide and a polyamide, and the polyolefin resin has a melting point of about 65°C to about 105°C.

11. The method according to claim 8, wherein the main resin includes polycarbonate, and the polyolefin resin has a melting point of about 65°C to about 105°C.

12. The method according to claims 8 to 11, wherein based on 100 weight parts of the thermoplastic resin, the amount of the main resin is about 70 weight parts to about 95 weight parts, and the amount of the polyolefin resin is about 5 weight parts to about 30 weight parts.

13. The method according to claims 7 to 12, wherein based on 100 weight parts of the thermoplastic resin, the thermoplastic resin further includes a flow improver with about 1 weight part to about 5 weight parts; and wherein the flow improver includes a cyclic polyester.

14. The method according to one of the preceding claims, wherein the resin further includes a filler, the filler comprises at least one of a fiber filler and a powder inorganic filler; and wherein, the fiber filler includes at least one selected from the group consisting of fiberglass, carbon fiber and polyamide fiber; and the powder inorganic filler includes at least one selected from the group consisting of silica, talc, aluminum hydroxide, magnesium hydroxide, calcium carbonate, magnesium carbonate, glass and kaolin.

## Patentansprüche

1. Ein Verfahren zur Herstellung eines Aluminiumlegierungsharzverbundstoffs, aufweisend die folgenden Schritte:
S1: Anodisieren einer Oberfläche eines Aluminiumlegierungssubstrats, um eine Oxidschicht auf der Oberfläche auszubilden, wobei die Oxidschicht mit Nanoporen, die eine Porengröße von 10 bis 100nm aufweisen, ausgebildet wird;
S2: Eintauchen des resultierenden Aluminiumlegierungssubstrats aus Schritt S1 in eine alkalische Lösung, die einen pH-Wert von etwa 10 bis etwa 13 aufweist, um Korrosionsporen, die eine Porengröße von 200nm bis 2000nm aufweisen, in einer Außenfläche der Oxidschicht auszubilden, wobei die alkalische Lösung aus einer wässrigen Lösung besteht, die aus zumindest einem ausgewählt aus einem löslichen Carbonat, einem löslichen Phosphat, einem löslichen Sulfat, einem löslichen Borat und NaOH besteht;
S3: Spritzgießen eines Harzes auf die Oberfläche des resultierenden Aluminiumlegierungssubstrats aus Schritt S2 in einer Form, um den Aluminiumlegierungsharzverbundstoff zu erhalten.

2. Das Verfahren nach Anspruch 1, wobei die alkalische Lösung eine wässrige Lösung, die zumindest eines ausgewählt aus einer Gruppe bestehend aus Na₂CO₃, NaHCO₃, NaH₂PO₄, Na₂HPO₄, Na₃PO₄, Na₂SO₃ und Na₂B₄O₇ aufweist, aufweist.

3. Das Verfahren nach Anspruch 2, wobei in der alkalischen Lösung Na₂CO₃ und/oder NaHCO₃ jeweils eine Konzentration in Massenprozent von etwa 0,1 Gew.-% - 15 Gew.-%, vorzugsweise jeweils von etwa 0,1 Gew.-% - 10 Gew.-%, aufweisen.

4. Das Verfahren nach einem der vorhergehenden Ansprüche, wobei Schritt S2 das wiederholte Eintauchen der resultierenden Aluminiumlegierung aus Schritt S1 in die alkalische Lösung, die einen pH-Wert von etwa 10 bis etwa 13 aufweist, für mehr als einmal aufweist, wobei jedes Eintauchen etwa 1 min bis etwa 60 min lang dauert, und Reinigen der Aluminiumlegierung mit Wasser nach jedem Eintauchen.

5. Das Verfahren nach einem der vorhergehenden Ansprüche, wobei Schritt S2 das wiederholte Eintauchen der resultierenden Aluminiumlegierung aus Schritt S1 in eine alkalische Lösung, die einen pH-Wert von etwa 10 bis etwa 13 aufweist, für etwa 2-10 mal aufweist.

6. Das Verfahren nach einem der vorhergehenden Ansprüche, wobei das Anodisieren der Oberfläche des Aluminiumlegierungssubstrats aufweist:
Bereitstellen des Aluminiumlegierungssubstrats als Anode in einer H₂SO₄-Lösung mit einer Konzentration von etwa 10 Gew.-% bis etwa 30 Gew.-%; und
Elektrolysieren des Aluminiumlegierungssubstrats bei einer Temperatur von etwa 10°C bis etwa 30°C bei einer Spannung von etwa 10 V bis etwa 100 V für etwa 1 min bis etwa 40 min, um die Oxidschicht mit einer Dicke von etwa 1 µm bis etwa 10 µm auf der Oberfläche des Aluminiumlegierungssubstrats auszubilden.

7. Das Verfahren nach einem der vorhergehenden Ansprüche, wobei das Harz ein thermoplastisches Harz ist.

8. Das Verfahren nach Anspruch 7, wobei das thermoplastische Harz ein Hauptharz und ein Polyolefinharz aufweist.

9. Das Verfahren nach Anspruch 8, wobei das Hauptharz Polyphenylenether und Polyphenylensulfid aufweist, und wobei das Polyolefinharz einen Schmelzpunkt von etwa 65°C bis etwa 105°C aufweist.

10. Das Verfahren nach Anspruch 8, wobei das Hauptharz Polyphenylenoxid und ein Polyamid aufweist, und wobei das Polyolefinharz einen Schmelzpunkt von etwa 65°C bis etwa 105°C aufweist.

11. Das Verfahren nach Anspruch 8, wobei das Hauptharz Polycarbonat aufweist, und wobei das Polyolefinharz einen Schmelzpunkt von etwa 65°C bis etwa 105°C aufweist.

12. Das Verfahren nach Anspruch 8 bis 11, wobei, bezogen auf 100 Gewichtsteile des thermoplastischen Harzes, die Menge des Hauptharzes etwa 70 Gewichtsteile bis etwa 95 Gewichtsteile beträgt, und wobei die Menge des Polyolefinharzes etwa 5 Gewichtsteile bis etwa 30 Gewichtsteile beträgt.

13. Das Verfahren nach den Ansprüchen 7 bis 12, wobei, bezogen auf 100 Gewichtsteile des thermoplastischen Harzes, das thermoplastische Harz weiterhin einen Fließverbesserer mit etwa 1 Gewichtsteil bis etwa 5 Gewichtsteilen aufweist; und wobei der Fließverbesserer ein cyclisches Polyester aufweist.

14. Das Verfahren nach einem der vorhergehenden Ansprüche, wobei das Harz weiterhin einen Füllstoff aufweist; wobei der Füllstoff zumindest einen eines Faserfüllstoffs und eines anorganischen Pulverfüllstoffs aufweist; und wobei der Faserfüllstoff zumindest eines ausgewählt aus der Gruppe bestehend aus Glasfaser, Kohlenstofffaser und Polyamidfaser aufweist; und wobei der anorganische Pulverfüllstoff zumindest eines ausgewählt aus der Gruppe bestehend aus Siliziumdioxid, Talk, Aluminiumhydroxid, Magnesiumhydroxid, Calciumcarbonat, Magnesiumcarbonat, Glas und Kaolin aufweist.

## Revendications

1. Un procédé de préparation d'un composite alliage d'aluminium/résine, comprenant les étapes suivantes :
S1 : l'anodisation d'une surface d'un substrat d'alliage d'aluminium pour former une couche d'oxyde sur la surface, la couche d'oxyde étant formée de manière à présenter des nanopores ayant une taille de pore comprise entre 10 et 100nm ;
S2 : l'immersion du substrat d'alliage d'aluminium résultant de l'étape S1 dans une solution alcaline présentant un pH compris entre environ 10 et environ 13 pour former des pores de corrosion ayant une taille de pore comprise entre 200nm et 2000nm dans une surface externe de la couche d'oxyde, la solution alcaline consistant d'une solution aqueuse consistant d'au moins un constituant sélectionné parmi un carbonate soluble, un phosphate soluble, un sulfate soluble, un borate soluble, et NaHO ;
S3 : le moulage par injection d'une résine sur la surface du substrat d'alliage d'aluminium résultant de l'étape S2 dans un moule pour obtenir le composite alliage d'aluminium/résine.

2. Le procédé selon la revendication 1, dans lequel la solution alcaline comprend une solution aqueuse comprenant au moins un constituant sélectionné dans un groupe constitué de Na₂CO₃, NaHCO₃, NaH₂PO₄, Na₂HPO₄, Na₃PO₄, Na₂SO₃ et Na₂B₄O₇.

3. Le procédé selon la revendication 2, dans lequel, dans la solution alcaline, Na₂CO₃ et/ou NaHCO₃ ont une concentration en pourcentage massique comprise entre environ 0,1 % en poids et 15 % en poids, respectivement, de préférence entre environ 0,1 % en poids et 10 % en poids, respectivement.

4. Le procédé selon l'une des revendications précédentes, dans lequel l'étape S2 comprend l'immersion répétée de l'alliage d'aluminium résultant de l'étape S1 dans une solution alcaline présentant un pH compris entre environ 10 et environ 13 plus d'une fois, chaque immersion prenant environ 1 mn à environ 60 mn, et le nettoyage à l'eau de l'alliage d'aluminium après chaque immersion.

5. Le procédé selon l'une des revendications précédentes, dans lequel l'étape S2 comprend l'immersion répétée de l'alliage d'aluminium résultant de l'étape S1 dans une solution alcaline présentant un pH entre environ 10 et environ 13 pour environ 2-10 fois.

6. Le procédé selon l'une des revendications précédentes, dans lequel l'anodisation de la surface du substrat d'alliage d'aluminium comprend :
la fourniture du substrat d'alliage d'aluminium en tant qu'anode dans une solution de H₂SO₄ ayant une concentration comprise entre environ 10 % en poids et environ 30 % en poids ; et
l'électrolyse du substrat d'alliage d'aluminium à une température comprise entre environ 10°C et environ 30°C à une tension comprise entre environ 10 V et environ 100 V pendant environ 1mn à environ 40mn pour former la couche d'oxyde de manière à présenter une épaisseur comprise entre environ 1 µm et environ 10 µm sur la surface du substrat d'alliage d'aluminium.

7. Le procédé selon l'une des revendications précédentes, dans lequel la résine est une résine thermoplastique.

8. Le procédé selon la revendication 7, dans lequel la résine thermoplastique comprend une résine principale et une résine de polyoléfine.

9. Le procédé selon la revendication 8, dans lequel la résine principale comprend de l'éther de polyphénylène et du sulfure de polyphénylène et la résine de polyoléfine a un point de fusion compris entre environ 65°C et environ 105°C.

10. Le procédé selon la revendication 8, dans lequel la résine principale comprend de l'oxyde de polyphénylène et un polyamide et la résine de polyoléfine a un point de fusion compris entre environ 65°C et environ 105°C.

11. Le procédé selon la revendication 8, dans lequel la résine principale comprend du polycarbonate et la résine de polyoléfine a un point de fusion entre environ 65°C et environ 105°C.

12. Le procédé selon les revendications 8 à 11, dans lequel la quantité de la résine principale est comprise entre environ 70 parties en poids et environ 95 parties en poids et la quantité de la résine de polyoléfine est comprise entre environ 5 parties en poids et environ 30 parties en poids, sur la base de 100 parties en poids de la résine thermoplastique.

13. Le procédé selon les revendications 7 à 12, dans lequel la résine thermoplastique comprend en outre un agent améliorant l'écoulement compris entre environ 1 partie en poids et environ 5 parties en poids, sur la base de 100 parties en poids de la résine thermoplastique ; et l'agent améliorant l'écoulement comprenant un polyester cyclique.

14. Le procédé selon l'une des revendications précédentes, dans lequel la résine comprend en outre une matière de charge, la matière de charge comprenant au moins une charge d'une charge de fibres et d'une charge de poudre inorganique ; et la charge de fibres comprenant au moins un constituant sélectionné dans le groupe constitué de fibres de verre, de fibres de carbone, et de fibres de polyamide ; et la charge de poudre inorganique comprenant au moins un constituant sélectionné dans le groupe constitué de silice, de talc, d'hydroxyde d'aluminium, d'hydroxyde de magnésium, de carbonate de calcium, de carbonate de magnésium, de verre, et de kaolin.
